# EUROPEAN PATENT SPECIFICATION

(11) **EP 2 496 468 B1**
(45) Date of publication and mention of the grant of the patent: **28.10.2015**
(21) Application number: 10779742.5
(22) Date of filing: 05.11.2010
(51) Int. Cl.: B62K 21/08, F16F 9/14, F16F 9/512, B62K 21/04

(54) **STEERING DAMPER WITH ACTIVE ADJUSTMENT OF DAMPING CHARACTERISTICS**
LENKUNGSDÄMPFER MIT AKTIVER EINSTELLUNG DER DÄMPFUNGEIGENSCHAFTEN
AMORTISSEUR DE DIRECTION À RÉGLAGE ACTIF DES CARACTÉRISTIQUES D'AMORTISSEMENT

(30) Priority: 06.11.2009 WO PCT/EP2009/064774
(43) Date of publication of application: 12.09.2012
(73) Proprietor: ÖHLINS RACING AB, 194 27 Upplands Väsby (SE)
(72) Inventor: SINTORN, Torkel, S-185 91 Vaxholm (SE); NILSSON, Johan, S-194 27 Upplands Väsby (SE); GUSTAFSSON, Leif, S-370 34 Holmsjö (SE); HANSEN, Thorleif, S-194 27 Upplands Väsby (SE); MATTISON, Joakim, S-194 27 Upplands Väsby (SE)
(74) Representative: Loqvist, Gabriel Mathias
(86) International application number: PCT/EP2010/066932
(87) International publication number: WO 2011/054934

(56) References cited:
- EP-A- 0 409 094
- EP-A- 1 248 013
- EP-A- 1 477 397
- WO-A-2007/053944
- WO-A1-2006/137788
- WO-A1-2007/134703
- JP-A- 2007 016 979
- US-A- 4 773 514
- US-A- 4 961 482
- US-A- 6 145 637
- US-A1- 2004 046 351
- US-A1- 2009 008 197

## Description

### Technical field

The present invention relates to a crown device comprising an adjustable steering damper, said crown device being intended to be used on a two or four-wheeled vehicle having a steering device comprising a handlebar or a steering wheel rotatable about a steering axis. Preferably the vehicle is a motorcycle, a snowmobile or an ATV. The steering damper is mounted at the steering device and is also coupled together with the frame or chassis by means of an attaching device. The damper is composed of an outer housing in which a main chamber is arranged, the main chamber comprising hydraulic fluid. The main chamber is partitioned into two chambers, for example by means of a delimiting part that is either rotatable about a first end or laterally displaceable in the chamber. The flow of the hydraulic fluid between the chambers is adjusted by a main valve and enables an adjustable damping of the relative motion between the steering device and the frame/chassis.

### Background

A steering damper is mounted between the rotating handlebar or steering wheel of a vehicle and its fixed frame or chassis in order to damp shocks and violent movements that propagate from the front wheel(s) to the handlebar. When the steering damper is used on a motorcycle, the steering damper can also solve the problem of wobbling that may occur in a motorcycle at high speeds. Wobbling refers to the front wheel on the motorcycle beginning to oscillate about the steering axis with increasing amplitude. When the steering damper is used on a four-wheeled terrain vehicle, a so called ATV, the steering damper is primarily intended to damp the rapid steering movements caused by, for example, an asymmetric load on the wheels.

It has proven to be a problem to separate desired steering movements from undesired shocks caused by unevenness of the ground in a steering damper. In order to not create a delay in the steering movement when the driver turns the handlebar, it is desirable that this desired rotational movement is undamped. At the same time undesired rotational movements caused by shocks from the ground should be damped as much as possible to minimize the risk of the handlebar being stricken from the hands of the driver. Thus, it is desirable to provide a steering damper that actively adapts the damping on basis of the cause of the movement.

In EP1248013 the problem is solved by a steering damper that by means of electronics senses and controls the damping on the handlebar depending on whether the movement is caused by the driver or the ground. From EP1477397 a device is known comprising the features of the preamble of claim 1.

A steering damper that solves this problem by means of a principally mechanical solution is not known.

### Summary

It is with respect to the above considerations and others that the present invention has been made. The present invention seeks to mitigate, alleviate or eliminate one or more of the above-mentioned deficiencies and disadvantages singly or in combination. In particular, the inventor has realized that it would be desirable to achieve a device that enables separating the damping of desired steering movements from undesired shocks caused by unevenness of the ground in a steering damper. The inventor has further realized that it would be desirable to achieve a device that enables separating the damping of desired steering movements from undesired shocks caused by unevenness of the ground in a steering damper in a manner that does not require electronic components.

It is also desirable that the damper obtains a damping characteristic that is the same for different individuals. Furthermore, the final product should be relatively inexpensive and uncomplicated to manufacture.

To achieve this, a crown device having the features as defined in the independent claim is provided. Further advantageous embodiments of the present invention are defined in the dependent claims.

The present invention relates to a crown device for adjusting the rotational damping of a steering device in a vehicle such that the rotational damping varies depending on whether the rotational movement about a steering axis is caused by a force acting on the steering device of the vehicle or by a force acting on the part(s) of the vehicle contacting the ground. By steering device it is referred to the handlebar, steering wheel or the like of the vehicle, and by parts of the vehicle contacting the ground it is referred to wheels, runners or similar arrangements that constitute the vehicle's points of contact against the ground.

The crown device according to the present invention is for example intended to be used on a one, two, three or four-wheeled vehicle.

According to a first aspect of the present invention, there is provided a device intended for a vehicle. The device comprises a steering device rotatable about a steering axis for adjusting the direction of the part(s) of the vehicle arranged for contacting ground, an attaching part that couples together the part(s) arranged for contacting ground with the steering device, and a steering damper. The attaching part rotates with the steering device and with the damping housing of the steering damper that encloses a main damping chamber. The main damping chamber comprises hydraulic fluid and is partitioned into a first and a second damping chamber, wherein flow of hydraulic fluid between the damping chambers of the steering damper is arranged to be adjusted by means of a main valve unit, mechanically coupled together with both the attaching part and the steering device, such as to adjust the rotational damping of the steering device. The amount of hydraulic fluid flowing through the main valve unit is determined by a relative movement between the attaching part and the steering device.

According to a second aspect of the present invention, there is provided a device intended for a vehicle. The device comprises a steering device rotatable about a steering axis for adjusting the direction of the part(s) of the vehicle arranged for contacting ground, an attaching part that couples together the part(s) arranged for contacting ground with the steering device, and a steering damper. The attaching part rotates with the steering device and with a delimiting part of the steering damper that partitions a main damping chamber which comprises hydraulic fluid into a first and a second damping chamber, wherein flow of hydraulic fluid between the damping chambers of the steering damper is arranged to be adjusted by means of a main valve unit, mechanically coupled together with both the attaching part and the steering device, such as to adjust the rotational damping of the steering device. The amount of hydraulic fluid flowing through the main valve unit is determined by a relative movement between the attaching part and the steering device. In other words, by means of the main valve unit being coupled together with both the attaching part and the steering device, an opening area of the main valve unit may be determined by a relative motion between the attaching part and the steering device such that the flow of the hydraulic fluid in a direction from and to the respective damping chamber of the steering damper is controlled depending on the cause of the rotational movement. By such a configuration there may be enabled means for adjusting the rotational damping of a steering device in a vehicle, such that the rotational damping varies depending on whether the rotational movement about the steering axis is caused by a force acting on the steering device of the vehicle or by a force acting on the part(s) of the vehicle contacting the ground. In other words, the device according to the first and second aspects of the present invention may enable separating the damping of desired steering movements from undesired shocks caused by unevenness of the ground in a steering damper. This may be achieved by means of a substantially or completely mechanical arrangement. Thus, electronic components may not be required for achieving advantages of the present invention.
Thus, according to an aspect of the invention, there is provided a device intended for a vehicle comprising: a steering device rotatable about a steering axis for adjusting the direction of the part(s) of the vehicle arranged for contacting ground; a steering damper comprising a damping housing that encloses a main damping chamber which comprises hydraulic fluid and is partitioned into a first damping chamber and a second damping chamber by a delimiting part that is arranged in the main damping chamber and movable with respect to the damping housing; an attaching part that couples together the part(s) arranged for contacting ground with the steering device and a steering damper, wherein the attaching part rotates with the steering device and any one of the damping housing and the delimiting part; and a main valve unit (HVU) adapted to adjust a flow of hydraulic fluid between the damping chambers of the steering damper, said main valve unit (HVU) being mechanically coupled together with both the attaching part and the steering device, such as to adjust the rotational damping of the steering device, and wherein the amount of hydraulic fluid flowing through the main valve unit (HVU) is determined by a relative movement between said attaching part and the steering device.

According to a third aspect of the present invention, there is provided a steering damper adapted to be arranged in a vehicle comprising a steering device rotatable about a steering axis for adjusting the direction of the part(s) of the vehicle arranged for contacting ground, and an attaching part that couples together the part(s) arranged for contacting ground with the steering device. The steering damper comprises a damping housing and a main damping chamber defined by the damping housing. The main damping chamber comprises hydraulic fluid and is partitioned into a first and a second damping chamber. The steering device is mechanically connectable to the attaching part to enable rotation of the attaching part with the steering device and with the damping housing. A main valve unit is adapted to adjust a flow of hydraulic fluid between the damping chambers such as to adjust the rotational damping of the steering device, wherein the main valve unit can be mechanically coupled together with both the attaching part and the steering device. The steering damper is configured such that a relative movement between the attaching part and the steering device determines an amount of hydraulic fluid flowing through the main valve unit.

According to a fourth aspect of the present invention, there is provided a steering damper adapted to be arranged in a vehicle comprising a steering device rotatable about a steering axis for adjusting the direction of the part(s) of the vehicle arranged for contacting ground, and an attaching part that couples together the part(s) arranged for contacting ground with the steering device. The steering damper comprises a damping housing and a main damping chamber defined by the damping housing. The main damping chamber comprises hydraulic fluid and is partitioned into a first and a second damping chamber by a delimiting part. The steering device is mechanically connectable to the attaching part to enable rotation of the attaching part with the steering device and with the delimiting part. A main valve unit is adapted to adjust a flow of hydraulic fluid between the damping chambers such as to adjust the rotational damping of the steering device, wherein the main valve unit can be mechanically coupled together with both the attaching part and the steering device. The steering damper is configured such that a relative movement between the attaching part and the steering device determines an amount of hydraulic fluid flowing through the main valve unit. In this manner, the amount of hydraulic fluid flowing through the main valve unit is determined by a relative movement between the attaching part and the steering device. Thus, according to an aspect of the invention, there is provided a steering damper adapted to be arranged in a vehicle comprising a steering device rotatable about a steering axis (SA) for adjusting the direction of the part(s) of the vehicle arranged for contacting ground, and an attaching part that couples together the part(s) arranged for contacting ground with the steering device, the steering damper comprising: a main damping chamber defined by a damping housing, said main damping chamber comprising hydraulic fluid and being partitioned into a first and a second damping chamber; wherein said steering device is mechanically connectable to said attaching part to enable rotation of said attaching part with said steering device and with any one of said damping housing and said delimiting part, a main valve unit (HVU) is adapted to adjust a flow of hydraulic fluid between the damping chambers such as to adjust the rotational damping of the steering device, wherein said main valve unit (HVU) can be mechanically coupled together with both the attaching part and the steering device, and wherein a relative movement between said attaching part and the steering device determines an amount of hydraulic fluid flowing through the main valve unit (HVU).

The main damping chamber being defined by the damping housing may for example refer to an arrangement wherein the damping housing encloses the main damping chamber.

The main valve unit may be arranged integral with the steering device.

By a configuration in accordance with the second, third and fourth aspects of the present invention same or similar advantages as the advantages achieved by the device according to the first aspect may be achieved wholly or partly.

Advantageous exemplifying configurations for realizing the present invention are described in the following.

The steering device may be elastically coupled together with the attaching part. The relative movement between the attaching part and the steering device may according to one example occur only during a predetermined initial rotational movement of the steering device from a base position of the steering device.

It is understood that relative rotational movement between the attaching part and the steering device refers to relative movement about the steering axis or about another axis substantially in parallel to the steering axis. The main valve unit may comprise a first and a second main valve.

The device or the steering device may comprise a first main valve part and a second main valve part arranged in the first main valve, and a third main valve part and a fourth main valve part arranged in the second main valve. The first main valve part may be coupled together with the steering device and the second main valve part may be coupled together with the damping housing of the steering damper. The third main valve part may be coupled together with the steering device and the fourth main valve part may be coupled together with the damping housing of the steering damper. The first and the second, and the third and the fourth main valve parts, respectively, may be moveable with respect to each other such that they form a first and a second variable opening area through which the hydraulic fluid can flow.

The opening area of the first main valve may decrease and the opening area of the second main valve may increase when the positions of the first and the second, and the third and the fourth main valve parts, respectively, relatively each other are determined by a rotational motion in a first direction of the steering device or by a rotational motion in a second direction of the housing of the steering device.

The opening area of the first main valve may increase and the opening area of the second main valve may decrease when the positions of the first and the second, and the third and the fourth main valve parts, respectively, relatively each other are determined by a rotational motion in a second direction of the steering device or by a rotational motion in a first direction of the housing of the steering device.

The opening area of the first main valve may increase and the opening area of the second main valve may decrease when the positions of the first and the second, and the third and the fourth main valve parts, respectively, relatively each other are determined by a rotational motion in a second direction of the steering device or by a rotational motion in a first direction of the delimiting part of the steering damper.

The first and third main valve parts of the first and second main valve may move synchronously in relation to each other such that the opening area of the first main valve decreases substantially as much as the opening area of the second main valve increases, and vice versa.

The device or the steering device may comprise a first driver and a second driver, wherein the first main valve part may be coupled together with the steering device via the first driver and the third main valve part may be coupled together with the steering device via the second driver.

The first driver may be coupled together with the first main valve part by means of a first link and the second driver may be coupled together with the third main valve part by means of a second link, where the links are hinged in both ends.

The device or the steering device may comprise at least one spring element, wherein the first driver may be pressed against the first main valve part and the second driver may be pressed against the third main valve part by means of the at least one spring element.

The at least one spring element may be located between the first main valve part and the third main valve part such that the at least one spring element creates a pressing force acting on both valve parts.

The device may furthermore comprise a valve actuator being coupled together with the steering device for actuating the first and second main valves during relative movement between the steering device and the attaching part, thereby altering a first and a second variable opening area of the main valve. In other words, the valve acutator is moved in response to movement of the steering device when the valve actuator is coupled to the steering device. The valve actuator may refer to a pin, dowel, bolt or the like. The valve actuator may be coupled to the steering device by means of direct connection or may be coupled to the steering device via an intermediate element which may be attachment means arranged for clamping the steering device to the attaching part. The valve actuator may also refer to an extending portion of the steering device or an extending portion of the intermediate element being coupled to the steering device. Put differently, the valve actuator may be a mechanical element intended to affect the main valve unit upon relative movement between the steering device and the attaching part, i.e. when the steering device is turned or when the attaching part is rotated by force acting on the part(s) of the vehicle contacting the ground.

The device may furthermore comprise a valve actuator being coupled together with the attaching part for actuating the first and second main valves during relative movement between the steering device and the attaching part, thereby altering a first and a second variable opening area of the main valve. In other words, the valve acutator is moved in response to movement of the attaching part when the valve actuator is coupled to the attaching part.

Put differently, the valve actuator may be a mechanical element intended to affect the main valve unit, in the sense that the hydraulic fluid flowing through the main valve unit is affected, upon relative movement between the steering device and the attaching part, i.e. when the steering device is turned or when the attaching part is rotated by force acting on the part(s) of the vehicle contacting the ground.

The opening area of the first main valve may decrease and the opening area of the second main valve may increase when the position of the valve actuator is determined by a rotational motion in a first direction of the steering device or by a rotational motion in a second direction of the attaching part. In other words, when the steering device is rotated in a first direction or when the attaching part is rotated in the opposite direction, the opening area of the first valve may decrease and the opening area of the second valve may increase.

The opening area of the first main valve may increase and the opening area of the second main valve may decrease when the position of the valve actuator is determined by a rotational motion in a second direction of the steering device or by a rotational motion in a first direction of the attaching part. In other words, when the steering device is rotated in a second direction or when the attaching part is rotated in the opposite direction, the opening area of the first valve may increase and the opening area of the second valve may decrease.The device or the steering device may comprise at least one holding-up means arranged between the attaching part and the steering device, the at least one holding-up means being arranged to determine the magnitude of the initial rotational motion.

The steering device may be coupled together with the attaching part via a torsion bar for allowing relative rotational movement between the steering device and the attaching part about a centre axis of the torsion bar. It is understood that torsion bar refers to a metal element being substantially elastically twistable and that acts as a spring. The torsion bar may be arranged in parallell to the steering axis.

The centre axis of the torsion bar may be arranged at a distance from the steering axis. In other words, the steering device rotates relative to the attaching part about the centre axis of the torsion bar which is arranged at a distance from the steering axis.

The device may furthermore comprise at least two mechanical stops for limiting said relative movement between the attaching part and the steering device. Hereby it may be possible to avoid excessive rotational movement between the steering device and the attaching part which otherwise could result in a damages to the torsion bar. The two mechanical stops may refer to two mechanical elements such as two pins extending from the attaching part, thereby limiting the relative rotational movement. In other emodiments, the two mechanical stops may refer to mechanical devices involving at least two parts. The mechanical stops may interact with other portions of the attaching part or the steering device. The mechanical stops may refer to portions of an intermediate element such as attachning means for clamping the steering wheel to the attaching part.

The two mechanical stops may comprise at least one element slideably arranged in an opening between two surfaces portions thereof, such that the element is moveable between said surface portions in order to limit said relative movement to rotational movement. Hereby it may be possible to avoid damaging the torsion bar if for example force is applied to the steering device in other directions than in the rotational direction. One such case may be during a motorcycle crash or during rough offroad driving. In one embodiment, an element is attached to one of the steering device and the attaching part and an opening is arranged in the other one of the steering device and the attaching part, in which opening the element is slidably arranged. The opening may be a hole, a slot, an aperture or the like. The opening may have dimensions relative to the element to achieve a play such that slideable operation is achieved. The element may have geometric properties such that axial relative movement between the steering device and the attaching part is limited. For example, the element may be shaped substantially as a bolt or screw, i.e. having a larger diameter in its one end.The attaching part may for example comprise a fork crown arranged at the front fork arrangement of a motorcycle.

The attaching part may comprise a cylindrical unit arranged around a steering connecting rod through which the steering axis runs.

The attaching part may be divided into an upper and a lower cylindrical part coupled together by means of an elastic holding-up means which is arranged to determine the magnitude of the initial rotational motion.

The device or the steering device may comprise a delimiting part arranged in the main damping chamber, which delimiting part is moveable with respect to the damping housing.

The steering damper may be a linear damping device in which the delimiting part is a piston attached to a piston rod for reciprocal movement within said damping chamber. The steering damper may be arranged at least partly inside the attaching part for achieving a compact installation. The piston rod may be hollow in order to achieve hydraulic fluid flow passages to the damping chambers.

The steering damper may be a rotational damping device, in which the delimiting part is a wing attached to a lever for reciprocal movement within said damping chamber. It is understood that lever refers to a mechanical element arranged for transferring rotational force to and from the wing. The rotational damping device may be of the type commonly referred to as a wing damper.

According to a fifth aspect of the present invention, there is provided a crown device adapted to be arranged in a vehicle comprising a steering device rotatable about a steering axis for adjusting the direction of the part(s) of the vehicle arranged for contacting ground. The crown device comprises a steering damper, an attaching part and a main valve unit. The steering damper comprises a damping housing that encloses a main damping chamber which comprises hydraulic fluid and is partitioned into a first damping chamber and a second damping chamber by a delimiting part that is arranged in the main damping chamber and moveable with respect to the damping housing. The attaching part is adapted to couple together the part(s) arranged for contacting ground with the steering device when the crown device is arranged in the vehicle. The attaching part is arranged to rotate with the steering device when the crown device is arranged in the vehicle. The main valve unit adapted to adjust a flow of hydraulic fluid between the damping chambers of the steering damper when the crown device is arranged in the vehicle. The main valve unit is coupled together with both the attaching part and the steering device when the crown device is arranged in the vehicle such as to adjust the rotational damping of the steering device. The amount of hydraulic fluid flowing through the main valve unit is determined by a relative movement between the attaching part and the steering device.

Thus, by allowing the steering device to move relative the attachment part, a relative movement is prodivided. Furthermore, by monitoring or measuring that relative movement between the steering device and the attachment part, the rotational damping of a steering device is adjustable such that the rotational damping varies depending on whether the rotational movement about a steering axis is caused by a force acting on the steering device of the vehicle or by a force acting on the part(s) of the vehicle contacting the ground.

By a configuration in accordance with the fifth aspect of the present invention same or similar advantages as the advantages achieved by the device according to the first aspect may be achieved wholly or partly.

Advantageous exemplifying configurations for realizing the present invention are described in the following.

The crown device may comprise attachment means adapted to couple the steering device together with the attaching part when the crown device is arranged in the vehicle, wherein the attachment means is arranged to allow relative movement between the attaching part and the steering device when the crown device is arranged in the vehicle. In other words, the attachment means may be an intermediate element between the attaching part and the steering device allowing relative movement between the attaching part and the steering device. The relative movement may be realized between the attaching part and the attachment means, i.e. the steering device is fixed to the attachment means. Alternatively, the relative movement may be realized between the steering device and the attachment means, i.e. the attaching part is fixed to the attachment means.

The attachment means may be adapted to elastically couple the steering device together with the attaching part when the crown device is arranged in the vehicle, wherein the attachment means is arranged to elastically allow relative movement between the attaching part and the steering device when the crown device is arranged in the vehicle.

The main valve unit may be mechanically coupled together with both the attaching part and the steering device such as to adjust the rotational damping of the steering device. Hereby a mechanical crown device may be achieved which may not require electronics to achieve actuation of the main valve unit.

The crown device may furthermore comprise an electronic sensor adapted to measure said relative movement between the attaching part and the steering device. Hereby the relative movement is measured and the steering damper may be controlled in a customized manner by for example and electronic control unit (ECU). Using an electronic sensor may also be advantageous compared to a mechanical actuating mechanism from a friction perspective.

The electronic sensor may be selected from a group of sensors comprising a potentiometer, a hall effect sensor, and an optical sensor.

The electronic sensor may be arranged to measure the magnitude and the direction of the relative movement between the attaching part and the steering device when the crown device is arranged in the vehicle. This may be advantageous because the additional information provided by the electronic sensor, i.e. magnitude and direction may be used to achieve improved control of the steering damper. Further objects and advantages of the various embodiments of the present invention will be described below by means of exemplifying embodiments.

### Brief description of the drawings

Exemplifying embodiments of the invention will be described below with reference to the accompanying drawings, in which:
Fig. 1 is a view of a first embodiment of the present invention where the invention is arranged on a motorcycle;
Fig. 2 is a sectional view of one of the attachment means;
Figs. 3a and 3b show holding-up means arranged in the attachment means;
Fig. 4 is a sectional view through a first type of steering damper;
Fig. 5 is a sectional view through a second type of steering damper;
Fig. 6 shows the valve arrangement according to a first embodiment;
Fig. 7 shows the valve arrangement according to a second embodiment;
Fig. 8a shows the function of the steering damper when the vehicle is driven straight forward and no disturbances act on the steering means;
Fig. 8b shows the function of the steering damper when the driver actively steers to the right or when a disturbance acts on the steering means from the left;
Fig. 8c shows the function of the steering damper when the driver actively steers to the left or when a disturbance acts on the steering means from the right;
Fig. 9 is a view of the steering damper according to the present invention arranged on a four-wheeled ATV; and
Fig. 10 is a sectional view of the steering damper mounted on an ATV.
Fig. 11 is a view of an embodiment of the device comprising a torsion bar.
Fig. 12 is a sectional view of the steering damper in Fig. 11.
Fig. 13 is a view of an embodiment of the device comprising a linear steering damper.
Fig. 14 is a view of another embodiment of the device comprising a linear steering damper.In the accompanying drawings, the same reference numerals denote the same or similar elements throughout the views.

### Detailed description

The present invention will now be described more fully hereinafter with reference to the accompanying drawings, in which exemplifying embodiments of the invention are shown. This invention may, however, be embodied in many different forms and should not be construed as limited to the embodiments set forth herein; rather, these embodiments are provided by way of example so that this disclosure will convey the scope of the invention to those skilled in the art. Furthermore, like numbers refer to like or similar elements throughout.

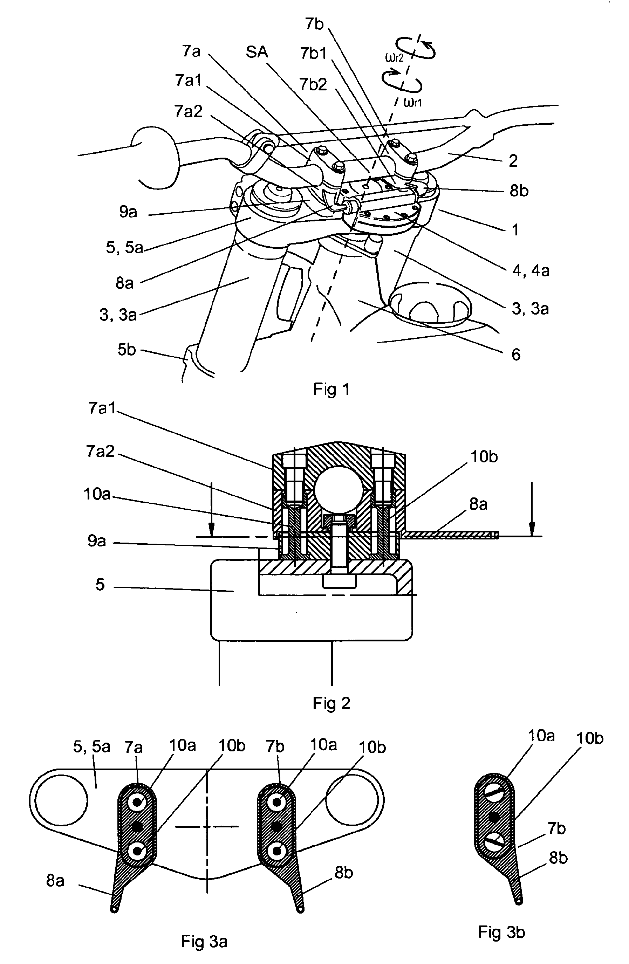

Fig. 1 is a view of a first embodiment of the present invention where the invention is arranged on a vehicle in the form of a motorcycle having two parts 3 contacting the ground - one front wheel (not shown) coupled together with the chassis by means of a front fork having two fork legs 3a and a back wheel attached in the chassis by means of a swing arm (not shown). According to the idea of the invention three wheels on this type of vehicle is also possible. The joining between the front fork legs 3a of the motorcycle and the motorcycle frame's front chassis 6 takes place by means of one or several attaching parts 5 which in this case have the shape of fork crowns 5a, 5b. The fork crowns 5a, 5b are rotatable about a steering axis SA centered in a steering column 6 extending through both of the fork crowns 5a, 5b. The front wheel (not shown) of the motorcycle is located between the right fork leg and the symmetrically located left fork leg 3a so that rotation of front wheel, fork crowns 5a, 5b and fork legs 3a takes place about the steering axis SA. A steering device in the form of a handlebar 2 is attached in the upper fork crown 5a by means of a first 7a and second 7b attachment means. The attachment means 7a, 7b comprise two parts; an upper 7a1, 7b1 and a lower 7a2, 7b2, between which the handlebar 2 is clamped.

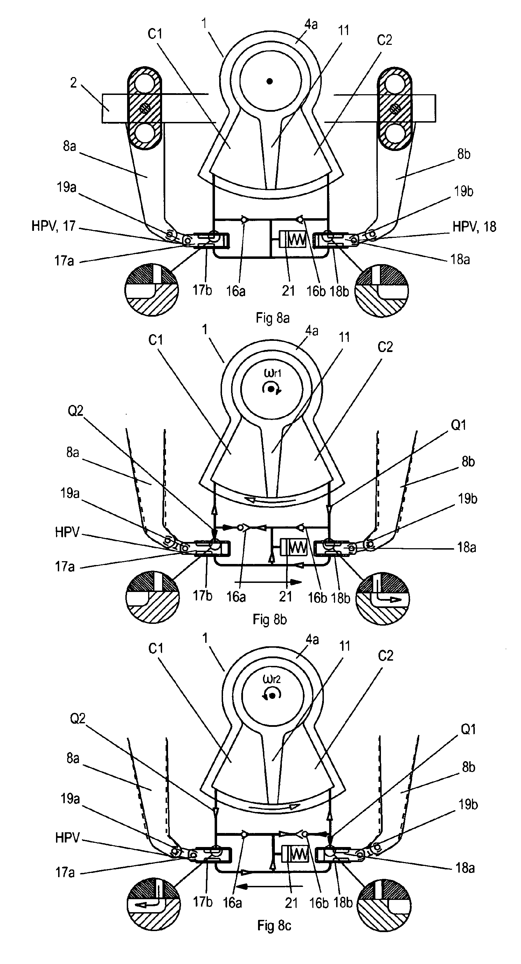

In addition to a handlebar, a steering wheel can also be used as steering device 2 for adjusting the direction of the vehicle's part(s) 3 contacting the ground. In Figs. 1 and 8a-8c the rotational movement of the steering device is shown by the arrows marked with ωᵣ₁, ωᵣ₂.When the vehicle is advanced straight forward, the steering device can be thought of to be in a base position in which the handlebar or the steering wheel is set such that the vehicle's part(s) 3 contacting the ground are parallel with the direction of travel when no forces act on the wheel.

In Fig. 1 a steering damper 4 is mounted below the handlebar 2 between the attachment means 7a, 7b and attached to the upper 5a of the fork crowns 5. The steering damper 4 is coupled together with the lower part 7a2, 7b2 of the respective attachment means by means of a first and a second driver 11 a, 11 b. The steering damper 4 can also be mounted above the handlebar or at another position in proximity of the handlebar.

In Fig. 2 there is shown a sectional view of one of the attachment means 7a. Preferably both of the attachment means 7a, 7b are constructed in the same manner. A third attachment part 9a, 9b is arranged in the attaching part 5 which couples together the attachment means 7a, 7b and the attaching part 5. Between the lower attachments means part 7a2, 7b2 and the third attachment part 9a, 9b holding-up means 10a, 10b are arranged. These holding-up means 10a, 10b are constructed such that they are elastic in the direction of rotation such that the lower attachment means part 7a2, 7b2 can rotate with an initial rotational movement with respect to the third attachment part 9a, 9b. The third attachment part 9a, 9b can be omitted and then the lower attachment means part 7a2, 7b2 is instead elastically attached directly in the attaching part 5 via the holding up-means 10a, 10b. Drivers 8a, 8b are extending from the lower attachment part 7a2, 7b2, which drivers 8a, 8b may be made of the same material or be a separate unit attached in the lower attachment part.

The holding-up means 10a, 10b can also be constructed such that they are more elastic when rotated compared to when bent. The holding-up means 10a, 10b can in that case be arranged in the attachment means in the manner shown in Fig. 3a. The holding-up means in that case have a waist, meaning that the central portion of the holding-up means is tapered. The tapering preferably is radial symmetric around the whole holding-up means, Fig. 3a, or mainly in a lateral direction, Fig. 3b, such that the pliancy of the holding-up means depends on how the holding-up means are mounted in the attachment means 7a, 7b. Thus, the lower attachment means part 7a2, 7b2, with which the handlebar 2 is coupled together, can to a larger degree be moved rotationally compared to horizontally with respect to the third attachment part 9a, 9b. In other words, the attachments means part 7a2, 7b2 and the third attachment part 9a, 9b may rotate in relation to each other within an initial rotational movement, but when the driver causes a force on the handlebar 2 in the direction of movement of the vehicle the coupling is mainly inelastic. Because the steering device 2 is elastically coupled together with the attaching part 5, rotation of the steering device 2 about the steering axis SA begins only after a predetermined initial rotational movement from the base position of the steering device has taken place.

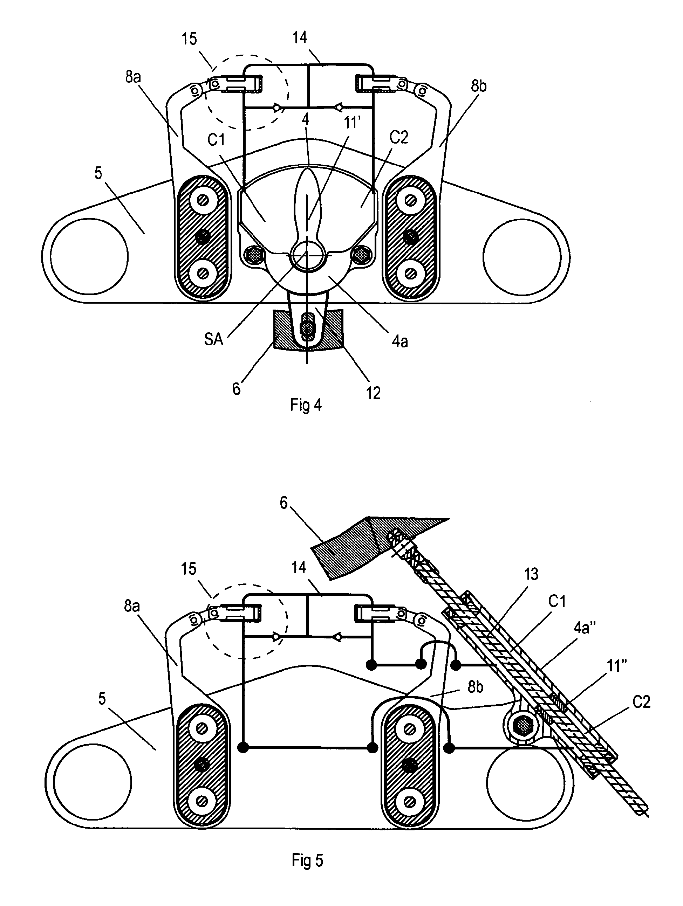

A first and a second type of steering damper having an inner moveable delimiting part 11 are described in more detail in Figs. 4 and 5.

Fig. 4 is a sectional view through a first type of steering damper, a rotational steering damper, comprising an outer damping housing 4a enclosing a main damping chamber which comprises hydraulic fluid and is partitioned into two damping chambers C1, C2 by means of a delimiting part 11 in the form of a wing 11'. The wing 11' is rotatable about the steering axis SA at a first wing end. The main damping chamber may be arranged to be filled with hydraulic fluid. The hydraulic fluid preferably comprises oil, possibly comprising various additives. The outer surface of the wing end is rotating in a custom-made cut-out in the housing 4a and in the first wing end there is also attached a lever 12. The lever 12 rotates with the wing 11' in relation to the outer housing 4a and it is according to known techniques intended to couple together the steering damper 4, which rotates in relation to the steering device 2, with the frame/chassis 6 of the vehicle. By means of this fixture the movement of the attaching part 5 in the damping chamber mainly becomes related to the movement of the handlebar 2 and the wing 11' in relation to the frame 6 of the vehicle. It is also possible to attach the housing 4a of the steering damper in the chassis/frame 6 and couple together the wing 11' with the attaching part 5, which rotates in relation to the handlebar 2, and achieve the same function.

Fig. 5 shows a second type of steering damper, a linear steering damper, comprising an outer, cylindrically shaped housing 4a" partitioned into two damping chambers C1, C2 by means of a delimiting part in the form of a piston 11" attached to a piston rod 13. The piston rod 13 may either extend through the whole of the cylindrically shaped housing 4a" or be arranged on a side of the piston 11 ". The steering damper housing 4a" is coupled together with any of the attaching parts 5 rotating about the steering axis SA together with the handlebar 2 and the piston bar 13 is coupled together with the chassis/frame 6, or vice versa.

In both embodiments in Figs. 4 and 5 the relative motion between the parts rotating about the steering axis SA and the chassis is damped by the delimiting part 11 moving in relation to the steering damper housing 4 and pressing hydraulic fluid through one or several channels 14. The channel 14 is preferably arranged as a hole in the damping housing 4a and delimited by a valve arrangement 15.

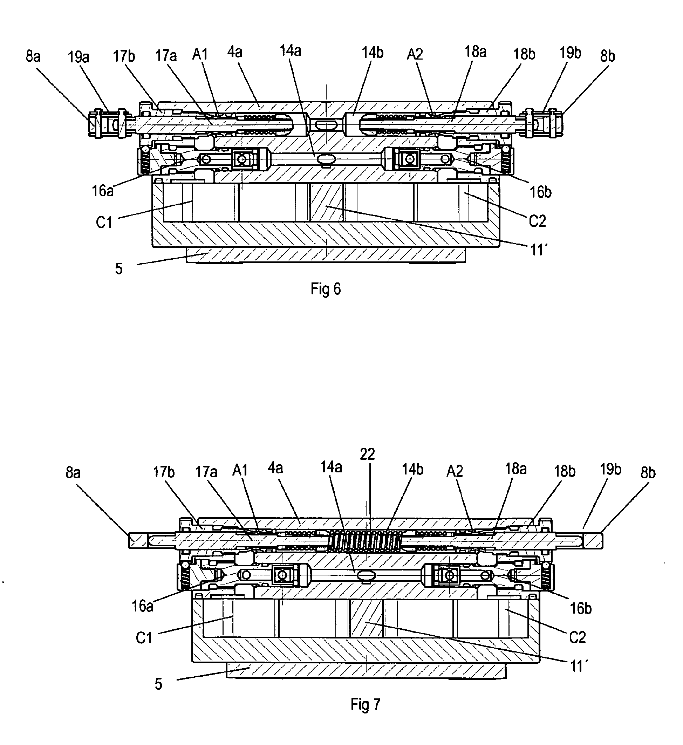

The valve arrangement 15 is shown in detail in Fig. 6 and comprises at least one non-return valve 16, in this embodiment two non-return valves 16a, 16b, and a main valve unit HVU comprising one or several main valves 17,18 mechanically coupled together with both the attaching part 5 and the steering device 2.

The first main valve comprises a first main valve part 17a and a second main valve part 17b. The first main valve part 17a is closely coupled together with the steering device 2 via a first link 19a to the first driver 8a and the second main valve part 17b is closely coupled together with the attaching part 5 via the damping housing 4a of the steering damper. The second main valve comprises a third main valve part 18a and a fourth main valve part 18b. The third main valve part 18a is via a second link closely coupled together with the steering device by means of the second driver 8b and the fourth main valve part 18b is closely coupled together with the attaching part 5 via the damping housing 4a of the steering damper as well. The first and the second 17a, 17b and the third and the fourth main valve parts 18a, 18b, respectively, move relatively to each other during the initial rotational movement. This creates a first and a second variable opening area A1, A2 through which the hydraulic fluid can flow when a pressure difference between the damping chambers C1, C2 is present and when no disturbance acts in a direction that is reverse to the intentional rotational movement of the steering means. By means of coordinated effect on the main valves' first and third valve parts 17a, 18a by respective adjustment devices, the opening area A1 of the first main valve 17 decreases while the opening area A2 of the second main valve 18 at the same time increases, and vice versa. An adjustment in the opening area results in that control of the flow of hydraulic fluid from and to the respective damping chamber C1, C2 of the steering damper is enabled and eventually completely flowing freely or being brought to a stop when the initial rotation has been finished.

In Fig. 7 there is shown an alternative embodiment of the valve arrangement 15. In this case the link 19a, 19b that couples together the drivers 8a, 8b and the first and the third main valve part 17a, 18a has been removed and replaced by one or several spring elements 22. The end of the first and the third main valve part 17a, 18a facing the respective driver 8a, 8b has a semispherical configuration in order to be able to accommodate certain lateral movements. The spring element 22 is located between the first main valve part 17a and the third main valve part 18a so that the spring element creates a pressing force on both of the valve parts 17a, 18a and ensures that the first and the third main valve part 17a, 18a is pressed against the driver 8a, 8b with no play. Other than that, the valve arrangement in Fig. 7 is substantially identical to the valve arrangement in Fig. 6.

In Figs. 8a-8c the function of the steering damper is described in more detail. In all of the figures the damping chambers C1, C2 are hydraulically coupled together by means of the damping channel 14 and the flow between the chambers is delimited by the main valves HPV, i.e. 17, 18, and blocked by non-return valves 16a, 16b. The non-return valves 16a, 16b are positioned in series with the main valves in the damping channel 15 and prevent the flow in the respective flow direction Q1, Q2, which is determined by the rotational direction of the steering damper. According to a known construction, a pressurization reservoir 21 can be positioned in series with the main valves and the non-return valves. The pressurization reservoir ensures that at least a base pressure always is present in the damping chambers C1, C2 and that volume changes in the hydraulic fluid can be absorbed. The pressurization reservoir 21 is located such that if there is a higher pressure in the pressurization reservoir than in the damping chambers the reservoir 21 is always coupled together with respective damping chambers via the non-return valves 20a, 20b.

Fig. 8a shows the function of the steering damper when the vehicle is driven straight forward and no disturbances are acting on the steering means 2, that are neither caused by the driver nor the configuration of the ground. The moveable delimiting part 11 of the steering damper is located such that the damping chambers are basically equally large. The opening between the first and the second valve part is open and a flow of hydraulic fluid can run between the damping chambers C1, C2 via the main valves 17, 18.

Fig. 8b shows the function of the steering damper when the driver is actively steering to the right, i.e. in the first direction ωᵣ₁. The damping housing 4a is turned with the handlebar 2 to the left in the figure in relation to the delimiting part 11 so that the volume of the second damping chamber C2 decreases. The possible initial rotation between the handlebar 2 and the attaching part 5 results in that the drivers 8a, 8b affect the main valves such that the first main valve 17 closes and the second main valve 18 opens. The hydraulic fluid flows between the damping chambers C2 and C1 in the direction Q1, also see the black/white arrow, via the channel 14 and through the completely open opening between the third and fourth main valve parts 18a, 18b of the second main valve 18. When a disturbance S1 that causes the wheel to turn to the left acts on the wheel, the flow Q2 of hydraulic fluid through the channel 14, also see the completely black arrow, is stopped both by the completely closed first main valve 17 and the first non-return valve 16a.

Fig. 8c shows the function of the steering damper when the driver is actively steering to the left or when a disturbance acts on the steering means from the right, i.e. in the second direction ωᵣ₂. The damping housing 4a is turned with the handlebar 2 to the right in the figure in relation to the delimiting part 11 so that the volume of the first damping chamber C1 decreases. In this case, the initial rotation results in that the drivers 8a, 8b affect the main valves such that the second main valve 18 closes and the first main valve 17 opens. The hydraulic fluid flows between the damping chambers C1 and C2 in the direction Q2, see also the completely black arrow, via the channel 14 and through the completely open opening between the first and second main valve parts 17a, 17b of the first main valve 17. When a disturbance S2 that causes the wheel to turn to the right acts on the wheel, the flow Q1 of hydraulic fluid through the channel 14, also see the black/white arrow, is stopped both by the completely closed second main valve 18 and the second non-return valve 16b.

When the first and the second main valve 17, 18, respectively, is open, i.e. when the turning motion of the handlebar is caused by the driver, the hydraulic fluid basically flows freely between the damping chambers with no restriction and no damping of the steering motion takes place but the vehicle reacts just as quickly as if no steering damper were mounted. If a certain amount of damping is also desired when steering it may be achieved by an adjustment of the position of the first and second main valve parts 17a, 17b; 18a, 18b relatively each other. When shocks and impacts causes the wheel to be turned against the driver's will the motion of the handlebar is blocked or strongly damped in the undesired turning direction as the main valves 17,18 in that direction are closed and the flow between the damping chambers is prevented.

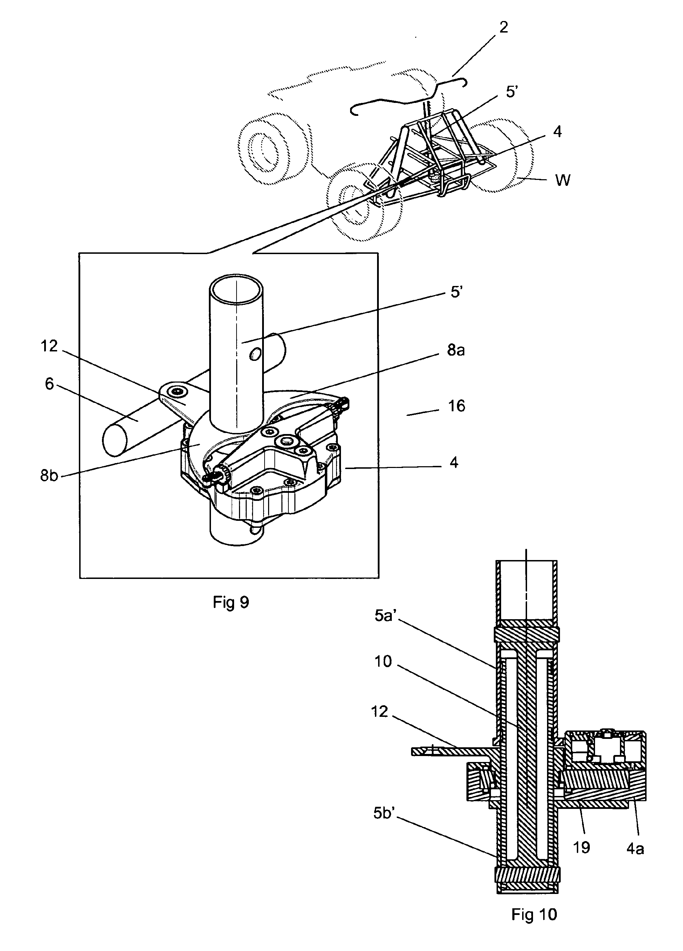

Fig. 9 shows the location of the steering damper on a four-wheeled ATV. In this case the damping housing is fixed to an attaching part 5 in the form of a cylinder 5' arranged concentrically around the steering axis. The cylinder 5' is divided into an upper and a lower part 5a', 5b' coupled together by means of an elastic holding-up means 10. The upper cylinder part 5a' is coupled together with the steering device 2, and the lower cylinder part 5b' is coupled together with the wheels 3 via one or several wheel suspension parts. In this embodiment the steering damper 4 is mounted in the lower cylinder part 5b' but the steering damper can also be mounted in the upper cylinder part 5a'. The steering damper housing 4a is fixed to a flange 19 protruding from the cylinder part, and hence moves together with the lower cylinder part 5b'. In this case, the delimiting part 8 that is moveable in the damping housing is coupled together with the fixed chassis parts 6 of the vehicle via the lever 12 so that the delimiting part 8 and the damping housing 4a move in relation to each other.

Of course, a linear steering damper such as the one shown in Fig. 4b can also be used in ATV applications.

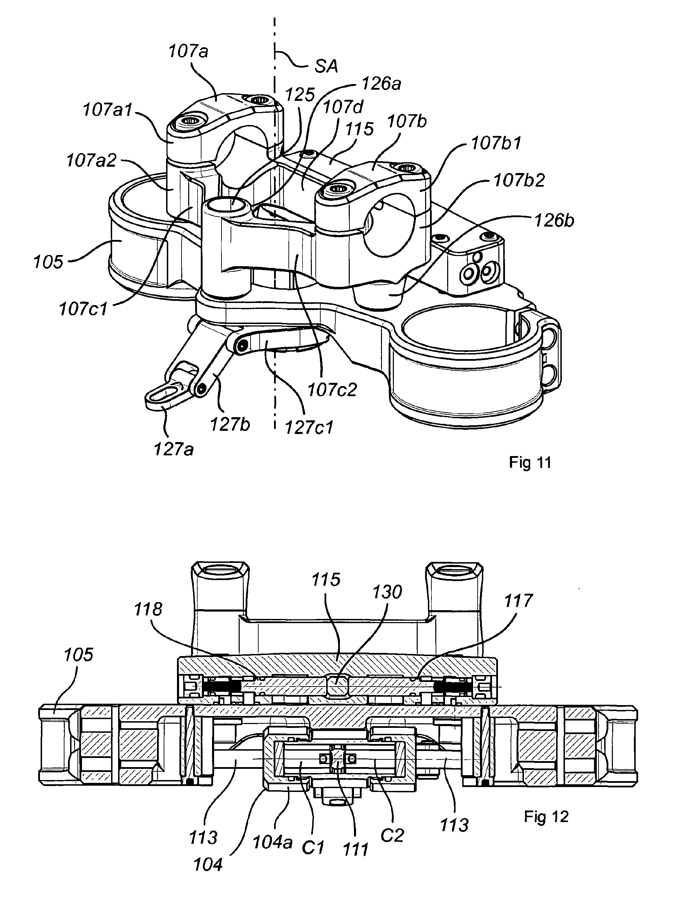

Fig. 11 shows a view of an embodiment of the present invention suitable for use on for example a motorcycle. The attaching part 105 in this embodiment has the shape of a fork crown. The fork crown is of the triple clamp type which means that two front forks are attachable to the fork crown at either ends and a steering column is attachable in between said front forks. The fork crown 105 is rotatable about a steering axis SA, coinciding with the axis of a steering column when attached thereto. A steering device in the form of a handlebar is attachable in the fork crown 105 by means of a first attachment means 107a and second attachment means 107b. The attachment means 107a, 107b comprise two parts; an upper 107a1, 107b1 and a lower 107a2, 107b2, between which a handlebar is clampable. The attachment means 107a, 107b are coupled together via bars 107c, 107d. The first bar, 107c is divided into two parts, 107c1, 107c2 between which a torsion bar 125 is disposed. The torsion bar 125 is attached in its upper end to the first bar 107c and it its lower end to the fork crown 105. The attachment means 107a, 107b are attached to the fork crown 105 via two elements 126a, 126b. The elements are slidably arranged in openings in the fork crown between two end surfaces of the openings, i.e. the elements are slidably arranged between two end positions defined by these end surfaces. The openings are larger in size relative to the elements, thereby allowing a slidable operation. In other embodiments, the elements are arranged in slots or holes in the fork crown. The elements are attached to the fork crown and the attaching part. Thereby, the attachment means are limited to rotational movement relative to the fork crown. On top of the fork crown 105 adjacent to the attachment means 107a, 107b, a main valve unit 115 is arranged.

Fig. 12 shows a sectional view of the device in Fig. 11. The sectional view is shown along a cross section of the main valve unit 115 and the steering damper 104. The main valve unit 115 is arranged on top of the fork crown 105 and the steering damper 104 is arranged substantially in parallel with the main valve unit 115 mostly inside the fork crown 105, extending partly through the bottom of the fork crown. The main valve unit 115 comprises a first and a second valve unit 117, 118. A valve actuator 130, being coupled to the attachment means 107a, 107b via the bar 107d, extends into the main valve unit 115. The steering damper 104 is of the linear damping type comprising a piston 111 partitioning the interior of the damping housing 104a, i.e. the damping chamber, into two damping chambers C1 and C2. The piston 11 is attached to a piston rod 113 which extends through the steering damper 104. The piston rod 113 is attached in both ends to the fork crown. In other embodiments, the piston rod may be attached in one end only.

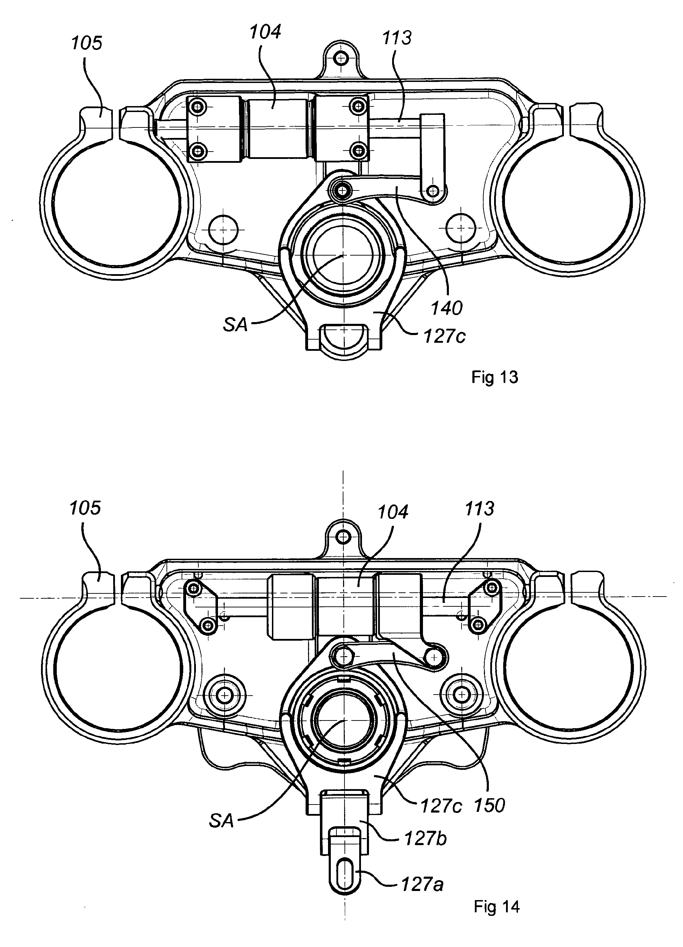

Fig 13 shows a view from beneath of an embodiment of the present invention. The attaching part is in the form of a fork crown 105. The housing of the linear steering damper 104 is attached to the fork crown, and the piston rod 113 is coupled via a link bar 140 to the rotating link 127c which in turn is attachable to the frame of the vehicle when mounted thereto.

Fig 14 shows a view from beneath of an embodiment of the present invention. The attaching part is in the form of a fork crown 105. The housing of the linear steering damper 104 is coupled via a link bar 140 to the rotating link 127c which in turn is attachable to the frame of the vehicle via the links 127a, 127b when mounted thereto. The piston rod 113 extends through the steering damper 104, and the piston rod is attached in both ends to the fork crown 105.

In conclusion, a device is disclosed for in a vehicle adjusting the rotational damping of a steering device such that the rotational damping varies depending on whether the rotational motion about a steering axis is caused by a force acting on the steering device of the vehicle or a force acting on the part(s) of the vehicle contacting the ground. The device comprises a steering damper comprising a damping housing enclosing a main chamber which comprises hydraulic fluid and is partitioned into a first and a second damping chamber, for example by a delimiting part moveable in relation to the damping housing. The damping housing is fixed on an attaching part that couples together the part(s) of the vehicle contacting the ground with the steering device. The present invention is characterized in that the flow of hydraulic fluid in the steering damper partly or wholly is adjusted by a main valve unit that is coupled together with both the attaching part and the steering device. By means of this coupling the opening area of the main valve unit is determined by a relative motion between the attaching part and the steering device such that the flow of the hydraulic fluid in a direction from and to the respective damping chamber of the steering damper is controlled depending on the cause of the rotational movement.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

1. A crown device adapted to be arranged in a vehicle comprising a steering device (2) rotatable about a steering axis (SA) for adjusting the direction of the part(s) (3) of the vehicle arranged for contacting ground, said device comprising:
- a steering damper (4) having a damping housing (4a, 4a", 104a) that encloses a main damping chamber which comprises hydraulic fluid and is partitioned into a first damping chamber (C1) and a second damping chamber (C2) by a delimiting part (11, 11', 11", 111) that is arranged in the main damping chamber and moveable with respect to the damping housing (4a, 4a", 104a);
- an attaching part (5, 5') adapted to couple together the part(s) (3) arranged for contacting ground with the steering device (2) when the crown device is arranged in the vehicle, wherein the attaching part (5, 5') is arranged to rotate with the steering device (2) when the crown device is arranged in the vehicle; and
a main valve unit (HVU) adapted to adjust a flow of hydraulic fluid (Q1, Q2) between the damping chambers (C1, C2) of the steering damper (4) when the crown device is arranged in the vehicle, said main valve unit (HVU) being coupled together with both the attaching part (5, 5') and the steering device (2) when the crown device is arranged in the vehicle such as to adjust the rotational damping of the steering device (2), **characterized in that** the amount of hydraulic fluid flowing through the main valve unit (HVU) is determined by a relative movement between said attaching part (5, 5') and the steering device (2).

2. A crown device according to claim 1, wherein the crown device further comprises attachment means (7a, 7b, 107a, 107b) adapted to couple the steering device together with the attaching part when the crown device is arranged in the vehicle, wherein the attachment means is arranged to allow relative movement between said attaching part (5, 5') and the steering device (2) when the crown device is arranged in the vehicle.

3. A crown device according to claim 2, wherein said attachment means (7a, 7b, 107a, 107b) is adapted to elastically couple the steering device together with the attaching part when the crown device is arranged in the vehicle, wherein the attachment means (7a, 7b, 107a, 107b) is arranged to elastically allow relative movement between said attaching part (5, 5') and the steering device (2) when the crown device is arranged in the vehicle.

4. A crown device according to any one of the claims 1-3, wherein said main valve unit (HVU) is mechanically coupled together with both the attaching part (5, 5') and the steering device (2) such as to adjust the rotational damping of the steering device (2).

5. A crown device according to any one of the claims 1-3, wherein said crown device further comprises an electronic sensor adapted to measure said relative movement between the attaching part (5, 5') and the steering device (2).

6. A crown device according to claim 5, wherein said electronic sensor is selected from a group of sensors comprising:
- a potentiometer,
- a hall effect sensor, and
- an optical sensor.

7. A crown device according to any one of the claims 5-6, wherein said electronic sensor is arranged to measure the magnitude and the direction of the relative movement between the attaching part (5, 5') and the steering device (2) when the crown device is arranged in the vehicle.

## Patentansprüche

1. Lenkerkronenvorrichtung, die dazu eingerichtet ist, in einem Fahrzeug angeordnet zu werden, das eine um eine Lenkachse (SA) drehbare Lenkvorrichtung (2) zum Einstellen der Richtung des Teils (der Teile) (3) des Fahrzeugs, das (die) zum Kontakt mit dem Boden vorgesehen ist (sind), umfasst, wobei die Vorrichtung umfasst:
- einen Lenkungsdämpfer (4), der ein Dämpfungsgehäuse (4a, 4a", 104a) aufweist, das eine Hauptdämpfungskammer umschließt, welche Hydraulikfluid umfasst und durch ein Begrenzungsteil (11, 11', 11 ", 111), welches in der Hauptdämpfungskammer angeordnet und bezüglich des Dämpfungsgehäuses (4a, 4a", 104a) beweglich ist, in eine erste Dämpfungskammer (C1) und eine zweite Dämpfungskammer (C2) aufgeteilt ist,
- ein Befestigungsteil (5, 5'), das dazu eingerichtet ist, das Teil (die Teile) (3), das (die) zum Kontakt mit dem Boden vorgesehen ist (sind), mit der Lenkvorrichtung (2) zu koppeln, wenn die Lenkerkronenvorrichtung in dem Fahrzeug angeordnet ist, wobei das Befestigungsteil (5, 5') dafür ausgelegt ist, mit der Lenkvorrichtung (2) zu rotieren, wenn die Lenkerkronenvorrichtung in dem Fahrzeug angeordnet ist; und
eine Hauptventileinheit (HVU), die dazu eingerichtet ist, einen Strom von Hydraulikfluid (Q1, Q2) zwischen den Dämpfungskammern (C1, C2) des Lenkungsdämpfers (4) einzustellen, wenn die Lenkerkronenvorrichtung in dem Fahrzeug angeordnet ist; wobei die Hauptventileinheit (HVU) sowohl mit dem Befestigungsteil (5, 5') als auch der Lenkvorrichtung (2) gekoppelt ist, wenn die Lenkerkronenvorrichtung in dem Fahrzeug angeordnet ist, um die Drehdämpfung der Lenkvorrichtung (2) einzustellen, **dadurch gekennzeichnet, dass** die Menge an Hydraulikfluid, die durch die Hauptventileinheit (HVU) strömt, durch eine relative Bewegung zwischen dem Befestigungsteil (5, 5') und der Lenkvorrichtung (2) bestimmt wird.

2. Lenkerkronenvorrichtung nach Anspruch 1, wobei die Lenkerkronenvorrichtung ferner Befestigungsmittel (7a, 7b, 107a, 107b) umfasst, die dazu eingerichtet sind, die Lenkvorrichtung mit dem Befestigungsteil zu koppeln, wenn die Lenkerkronenvorrichtung in dem Fahrzeug angeordnet ist, wobei die Befestigungsmittel dafür ausgelegt sind, eine relative Bewegung zwischen dem Befestigungsteil (5, 5') und der Lenkvorrichtung (2) zu ermöglichen, wenn die Lenkerkronenvorrichtung in dem Fahrzeug angeordnet ist.

3. Lenkerkronenvorrichtung nach Anspruch 2, wobei die Befestigungsmittel (7a, 7b, 107a, 107b) dazu eingerichtet sind, die Lenkvorrichtung mit dem Befestigungsteil elastisch zu koppeln, wenn die Lenkerkronenvorrichtung in dem Fahrzeug angeordnet ist, wobei die Befestigungsmittel (7a, 7b, 107a, 107b) dafür ausgelegt sind, elastisch eine relative Bewegung zwischen dem Befestigungsteil (5, 5') und der Lenkvorrichtung (2) zu ermöglichen, wenn die Lenkerkronenvorrichtung in dem Fahrzeug angeordnet ist.

4. Lenkerkronenvorrichtung nach einem der Ansprüche 1 - 3, wobei die Hauptventileinheit (HVU) sowohl mit dem Befestigungsteil (5, 5') als auch der Lenkvorrichtung (2) mechanisch gekoppelt ist, um die Drehdämpfung der Lenkvorrichtung (2) einzustellen.

5. Lenkerkronenvorrichtung nach einem der Ansprüche 1 - 3, wobei die Lenkerkronenvorrichtung ferner einen elektronischen Sensor umfasst, der dazu eingerichtet ist, die relative Bewegung zwischen dem Befestigungsteil (5, 5') und der Lenkvorrichtung (2) zu messen.

6. Lenkerkronenvorrichtung nach Anspruch 5, wobei der elektronische Sensor aus einer Gruppe von Sensoren ausgewählt ist, welche umfasst:
- ein Potentiometer,
- einen Hall-Sensor, und
- einen optischen Sensor.

7. Lenkerkronenvorrichtung nach einem der Ansprüche 5 - 6, wobei der elektronische Sensor dafür ausgelegt ist, den Betrag und die Richtung der relativen Bewegung zwischen dem Befestigungsteil (5, 5') und der Lenkvorrichtung (2) zu messen, wenn die Lenkerkronenvorrichtung in dem Fahrzeug angeordnet ist.

## Revendications

1. Dispositif en couronne adapté pour être disposé dans un véhicule comprenant un dispositif de direction (2) pouvant tourner autour d'un axe de direction (SA) pour ajuster la direction de la(des) pièce(s) (3) du véhicule disposée(s) pour venir en contact avec le sol, ledit dispositif comprenant:
- un amortisseur de direction (4) ayant un boîtier d'amortissement (4a, 4a", 104a) qui renferme une chambre d'amortissement principale qui comprend du fluide hydraulique et est partagée en une première chambre d'amortissement (C1) et une deuxième chambre d'amortissement (C2) par une pièce de délimitation (11, 11', 11 ", 111) qui est disposée dans la chambre d'amortissement principale et mobile par rapport au boîtier d'amortissement (4a, 4a", 104a),
- une pièce de fixation (5, 5') adaptée pour accoupler ensemble la(les) pièce(s) (3) disposée(s) pour venir en contact avec le sol avec le dispositif de direction (2), lorsque le dispositif en couronne est disposé dans le véhicule, dans lequel la pièce de fixation (5, 5') est disposée pour tourner avec le dispositif de direction (2) lorsque le dispositif en couronne est disposé dans le véhicule, et
une unité de vanne principale (HVU) adaptée pour ajuster un débit de fluide hydraulique (Q1, Q2) entre les chambres d'amortissement (C1, C2) de l'amortisseur de direction (4), lorsque le dispositif en couronne est disposé dans le véhicule, ladite unité de vanne principale (HVU) étant accouplée à la fois avec la pièce de fixation (5, 5') et le dispositif de direction (2), lorsque le dispositif de direction est disposé dans le véhicule de manière à ajuster l'amortissement en rotation du dispositif de direction (2), **caractérisé en ce que** la quantité de fluide hydraulique s'écoulant à travers l'unité de vanne principale (HVU) est déterminée par un mouvement relatif entre ladite pièce de fixation (5, 5') et le dispositif de direction (2).

2. Dispositif en couronne selon la revendication 1 dans lequel le dispositif en couronne comprend en plus des moyens de fixation (7a, 7b, 107a, 107b) adaptés pour accoupler le dispositif de direction à la pièce de fixation, lorsque le dispositif en couronne est disposé dans le véhicule, dans lequel les moyens de fixation sont disposés pour permettre un mouvement relatif entre ladite pièce de fixation (5, 5') et le dispositif de direction (2) lorsque le dispositif en couronne est disposé dans le véhicule.

3. Dispositif en couronne selon la revendication 2 dans lequel lesdits moyens de fixation (7a, 7b, 107a, 107b) sont adaptés pour accoupler de manière élastique le dispositif de direction à la pièce de fixation, lorsque le dispositif en couronne est disposé dans le véhicule, dans lequel les moyens de fixation (7a, 7b, 107a, 107b) sont disposés pour permettre de manière élastique un mouvement relatif entre ladite pièce de fixation (5, 5') et le dispositif de direction (2), lorsque le dispositif en couronne est disposé dans le véhicule.

4. Dispositif en couronne selon l'une quelconque des revendications 1 - 3 dans lequel ladite unité de vanne principale (HVU) est mécaniquement accouplée à la fois à la pièce de fixation (5, 5') et au dispositif de direction (2) de manière à ajuster l'amortissement en rotation du dispositif de direction (2).

5. Dispositif en couronne selon l'une quelconque des revendications 1 - 3 dans lequel ledit dispositif en couronne comprend en outre un capteur électronique adapté pour mesurer ledit mouvement relatif entre la pièce de fixation (5, 5') et le dispositif de direction (2).

6. Dispositif en couronne selon la revendication 5 dans lequel ledit capteur électronique est sélectionné à partir d'un groupe de capteurs comprenant:
- un potentiomètre,
- un capteur à effet Hall, et
- un capteur optique.

7. Dispositif en couronne selon l'une quelconque des revendications 5 - 6 dans lequel ledit capteur électronique est agencé pour mesurer l'amplitude et la direction du mouvement relatif entre la pièce de fixation (5, 5') et le dispositif de direction (2) lorsque le dispositif en couronne est disposé dans le véhicule.
